# EUROPÄISCHE PATENTANMELDUNG

(11) **EP 3 473 478 A1**
(43) Veröffentlichungstag der Anmeldung: **24.04.2019**
(21) Anmeldenummer: 18200593.4
(22) Anmeldetag: 16.10.2018
(51) Int. Cl.: B60K 25/06, B60K 25/08, B60L 1/00, B61D 43/00

(54) **FAHRZEUGANHÄNGER**

(30) Priorität: 19.10.2017 DE 102017124434
(71) Anmelder: Hobby-Wohnwagenwerk Ing. Harald Striewski GmbH, 24787 Fockbek (DE)
(72) Erfinder: Gottwad, Dirk, 24340 Eckernförde (DE); Vogt, Andreas, 24536 Neumünster (DE); Bender, Steffen, 35713 Eschenburg (DE); Kunz, Thomas, 365713 Eschenburg (DE); Welle, Rudolf, 51503 Rösrath (DE); Schaurer, Oliver, 85445 Oberding (DE); Beijersbergen van Henegouwen, Cornelis Martin, 5314 AP Bruchem (NL); Strasser, Josef, 83257 Gstadt am Chiemsee (DE); Mertinko, Christian, 83349 Plattling (DE)
(74) Vertreter: Rausch Wanischeck-Bergmann Brinkmann

(57) **Zusammenfassung**

Die Erfindung betrifft einen Fahrzeuganhänger. Um einen Fahrzeuganhänger und ein elektrisches System für einen Fahrzeuganhänger bereitzustellen, welche eine sichere Versorgung des Anhängers gewährleisten, wird mit der Erfindung vorgeschlagen, dass dieser einen durch eine Bewegung des Anhängers antreibbaren elektrischen Generator aufweist.

## Beschreibung

Fahrzeuganhänger, insbesondere Wohnanhänger, haben inzwischen sehr aufwändige elektrische Systeme, Steuerungssysteme und dergleichen, die dem Grunde nach dauerhaft mit elektrischer Energie versorgt werden müssen.

Bei modernen Zugfahrzeug-/Anhängersystemen ist jedoch die Elektronik der Zugfahrzeuge so ausgelegt, dass diese zunächst ihren eigenen Bedarf decken, somit also nicht gewährleistet ist, dass immer ausreichend elektrische Energie in den Bereich des Anhängers gelangt.

Ausgehend vom vorbeschriebenen Stand der Technik liegt der Erfindung die **Aufgabe** zugrunde, einen Fahrzeuganhänger und ein elektrisches System für einen Fahrzeuganhänger bereitzustellen, welche eine sichere Versorgung des Anhängers gewährleisten.

Zur technischen **Lösung** dieser Aufgabe wird ein Fahrzeuganhänger mit dem Merkmal des Patentanspruches 1 vorgeschlagen. Weitere Vorteile und Merkmale ergeben sich aus den Unteransprüchen. Ein elektrisches System für einen Fahrzeuganhänger ist ebenfalls durch die Erfindung gekennzeichnet.

Erfindungsgemäß weist ein Fahrzeuganhänger einen elektrischen Generator auf. Dieser ist durch eine Bewegung des Anhängers antreibbar. Dies kann beispielsweise unter Nutzung der Drehung der Achsen bzw. Wellen eines Anhängers und dessen Fahrwerk erfolgen. Übertragungen können Zahnriemen, Getriebe, Reibräder und dergleichen sein, aber auch hydraulische Systeme, pneumatische Systeme und dergleichen.

Wesentlich ist, dass eine beliebige Bewegung des Anhängers umgesetzt wird in eine Rotationsbewegung eines elektrischen Generators. So können auch Federwege, Bremswege und dergleichen in an sich bekannter Weise genutzt werden, um einen elektrischen Generator zu betreiben.

Erfindungsgemäß ist der Generator über ein Ladegerät mit einem Akkumulator oder sonstigen Speichersystemen verbunden, und lädt im Betrieb diese auf. Das Ladegerät kann etwa vom Zugfahrzeug gelieferte Energie und selbsterzeugte Energie verwerten und sicherstellen, dass die anhängerseitigen Akkumulatoren weitgehend geladen sind.

In vorteilhafter Weise handelt es sich bei dem Anhänger um einen Wohnanhänger, also einen Wohnwagen mit einem vollständigen elektrischen Nutzsystem und elektrischen Steuerungen.

Erfindungsgemäß wird eine elektrische Einheit für Anhänger gekennzeichnet, welche neben dem Generator auch einen Akkumulator und ein Ladegerät bzw. Lade3regler, zumindest jeweils mit Spannungsregelung, umfasst sowie eine Antriebseinheit zum Antrieb des Generators bei Bewegung des Anhängers.

Je nach Anwendung ist es auch sinnvoll, einen Generator allein, allenfalls mit einer Spannungsregelung, zu betreiben, um direkt Verbraucher wie zB eine Bremsanlage, einen Kühlschrank oder dergleichen zu betreiben.

Bei einer vorteilhaften Ausführung ist der Generator direkt oder mittels einer Konsole verschieb- und/oder verdrehbar an einem Längsträger des Gestells des Anhängers oder an der Achse des Anhängers befestigt. Dabei ist der Generator direkt oder über eine Getriebeübersetzung an eine Reibrolle gekoppelt, die linear und/oder rotatorisch an mindestens einen Reifen des Anhängers angepresst werden kann.

In einer weiteren vorteilhaften Ausführung wird ebenfalls ein Generator direkt oder mittels einer Konsole verschieb- und/oder verdrehbar an der Bremsträgerplatte und/oder dem Schwinghebel befestigt. Dabei ist der Generator direkt oder über eine Getriebeübersetzung an eine Reibrolle gekoppelt, die linear und/oder rotatorisch an mindestens eine Bremstrommel und/oder Innenseite des Felgenmauls des Anhängers angepresst werden kann. Dazu kann in einer besonders vorteilhaften Ausführung die Bremstrommel oder das Felgenmaul mit einer reib- und laufoptimierten Oberfläche und/oder Oberflächenkontur ausgeführt sein.

Bei einer weiteren vorteilhaften Ausführung ist der Generator direkt oder mittels einer Konsole verschieb- und/oder verdrehbar am Längsträger oder an der Achse des Anhängers befestigt. Dabei ist der Generator direkt oder über eine Getriebeübersetzung an ein Zahnrad oder Rollenritzel gekoppelt, das linear und/oder rotatorisch mit der Verzahnung an mindestens einer Bremstrommel oder Innenseite des Felgenmauls des Anhängers in Eingriff gebracht werden kann. Die Verzahnung und die Bremstrommel oder Felge können in einer Version einstückig ausgebildet sein.

Eine weitere Ausgestaltung beinhaltet eine Nachstellfeder im Verschiebe- und/oder Verdrehmechanismus (Einrückmechanismus), die die Einfederbewegung des Schwinghebels während der Fahrt ausgleicht, so dass das Zahnrad oder Rollenritzel des Generators weiter in Eingriff mit der Verzahnung der Bremstrommel oder der Felge bleibt.

Einer weitere vorteilhafte (Nachrüst-) Ausführung beinhaltet ein trommelförmiges Zusatzelement, das zwischen Felge und Bremstrommel angeordnet ist und korrespondierend zum generatorseitigen Zahnrad oder Rollenritzel außen- oder innenverzahnt ist.

Eine weitere vorteilhafte Ausführung beinhaltet einen am Anhänger befestigten Generator, der direkt oder über eine Getriebeübersetzung an eine Laufrolle gekoppelt ist und bei Bedarf über einen Linearaktuator und/oder Seilrollenmechanismus abgesenkt und in Kontakt mit dem Fahrbahnbelag gebracht werden kann. Eine weitere vorteilhafte Ausführung beinhaltet eine Nachstellfeder im Absenkmechanismus, die die Einfederbewegung der Schwinghebel während der Fahrt ausgleicht.

Gemäß einer weiteren vorteilhaften Ausgestaltung ist ein sogenannter PTO (Power Take Out) Stummel vorgesehen, bei dem durch den Achsstummel eine Welle geführt ist, welche mit der rotierenden Bremsnabe eines der Räder des Anhängers verbunden ist. An deren Ende ist eine drehmomentenübertragende Welle angebracht, z.B. eine Welle mit Gleichlaufgelenken, eine biegsame Welle, eine Welle mit Kardangelenken an beiden Enden und Längenausgleich, welche dann mit einem am Chassis oder Aufbau verbundenen Motor/Generator verbunden ist und die Drehbewegung der Räder bzw. das Drehmoment überträgt.

Um hier das Drehzahlniveau von Rad und Motor anzupassen, ist vorteilhafterweise entweder im Rad ein Planetensatz integriert (wie bei Antriebsachsen von LKW) oder die Motor/Generatoreinheit ist mit einem entsprechenden Getriebe ausgerüstet. Selbstverständlich kann das Getriebe auch an geeigneter Stelle als eigenständige Einheit zwischen PTO-Stummel und Motor/Generator zwischengeschalten sein.

Auch eine weitere vorteilhafte Lösung umfasst einen PTO-Stummel, auf dessen Durchtriebswelle hinten eine Riemenscheibe oder Zahnriemenrad oder Kettenrad, oder dergleichen angebracht ist. Nachdem die Achsschwinge beispielsweise beim Überfahren von Unebenheiten Federwege ausführt welche auf die z.B. Riemenlänge Auswirkungen hätten, wird von dieser ersten Riemenschiebe ein Zahnriemen zu einer zweiten Riemenscheibe geführt, welche konzentrisch zum Drehpol der Achsschwinge befindet. Diese zweite Riemenscheibe weist eine zweite Riemenrille auf, in der der zweite Riemen zum am Chassis verbauten Motor/Generator führt. Durch diese doppelten Riemenführung bleiben die Riemenlängen auch bei Federungsarbeit immer konstant. Durch die doppelte Riemenführung kann hier auch schon eine erste Getriebeübersetzung erzeugt werden. Trotzdem kann auch hier die Motor/Generatoreinheit mit einem Getriebe ausgerüstet sein. Selbstverständlich kann die Motor/Getriebeeinheit auch an anderer Stelle am Aufbau/Chassis befestigt sein und das Getriebe auch an geeigneter Stelle als eigenständige Einheit zwischen PTO-Stummel und Motor/Generator zwischengeschalten sein.

Um die Belastungen auf der Durchtriebswelle bzw. den Riemen - insbesondere beim Einsatz als Rangierhilfsantrieb - gering zu halten, empfiehlt es sich im Bremsstummel einen Planetensatz ähnlich wie bei einer LKW-Antriebsachse zu integrieren. Alternativ kann die Motor/Generatoreinheit auch als Radnabenmotor direkt am Stummel ausgeführt werden.

Mit der Erfindung wird eine mit einfachen wirtschaftlichen Mitteln erstellbare Einheit zur elektrischen Versorgung eines Anhängers bereitgestellt.

Im Rahmen der Erfindung kann auch Windkraft zum Antrieb des Generators genutzt werden.

Weitere Vorteile und Merkmale ergeben sich aus der folgenden Beschreibung anhand der Figuren. Dabei zeigen :
- Figur 1: eine Seitenansicht eines Wohnanhängers;
- Figur 2: eine Draufsicht auf ein Chassis für einen Anhänger gemäß Figur 1
- Figur 3: eine Seitenansicht des Chassis gemäß Figur 2
- Figur 4: eine Detailansicht des Chassis gemäß Figuren 2 und 3 mit einer Ausführungsform für einen Generatoranschluß;
- Figur 5: eine Detailansicht des Chassis gemäß Figuren 2 und 3 mit einer weiteren Ausführungsform für einen Generatoranschluß;
- Figur 6: eine Detailansicht der Riemenführung gemäß Figur 5;
- Figur 7: eine Ansicht mit einer weiteren Ausführungsform für einen Generatoranschluß in Form einer Reibrolle/Reifen-Verbindung;
- Figur 8: eine Ansicht mit einer weiteren Ausführungsform für einen Generatoranschluß in Form einer Reibrolle/Trommel-Verbindung;
- Figur 9: eine Ansicht mit einer weiteren Ausführungsform für einen Generatoranschluß in Form einer Verzahnung;
- Figur 10: eine Ansicht mit einer alternativen Ausführungsform für einen Generatoranschluß in Form einer Verzahnung und
- Figur 11: eine Ansicht mit einer weiteren Ausführungsform für einen Generatoranschluß in Form einer Laufrolle.

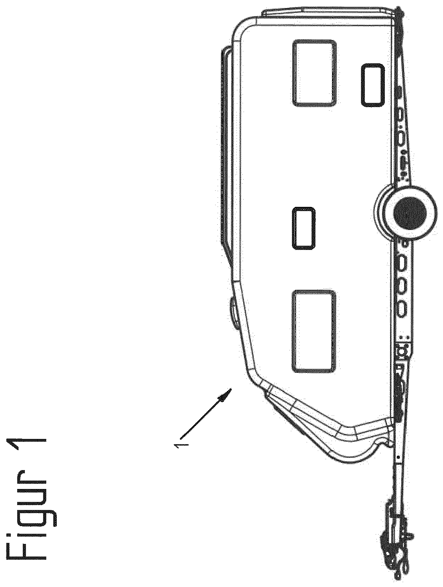

Figur 1 zeigt einen typischen Wohnwagen 1, wobei hier nur stellvertretend ein Einachser dargestellt ist. Genauso gut könnte die erfindungsgemäße Lösung für jede andere Anhängerform z.B. einen Nutzanhänger, einen Verkaufsanhänger, usw. ausgelegt sein. Ebenso kann dieser Anhänger mit einer, zwei oder mehr Achsen ausgerüstet sein.

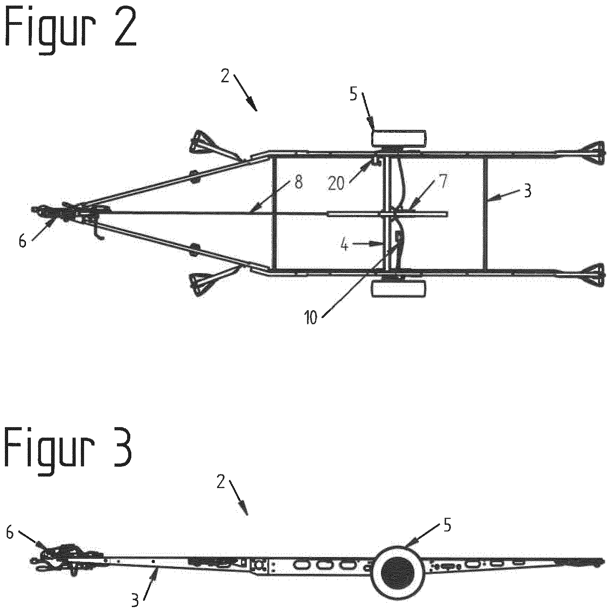

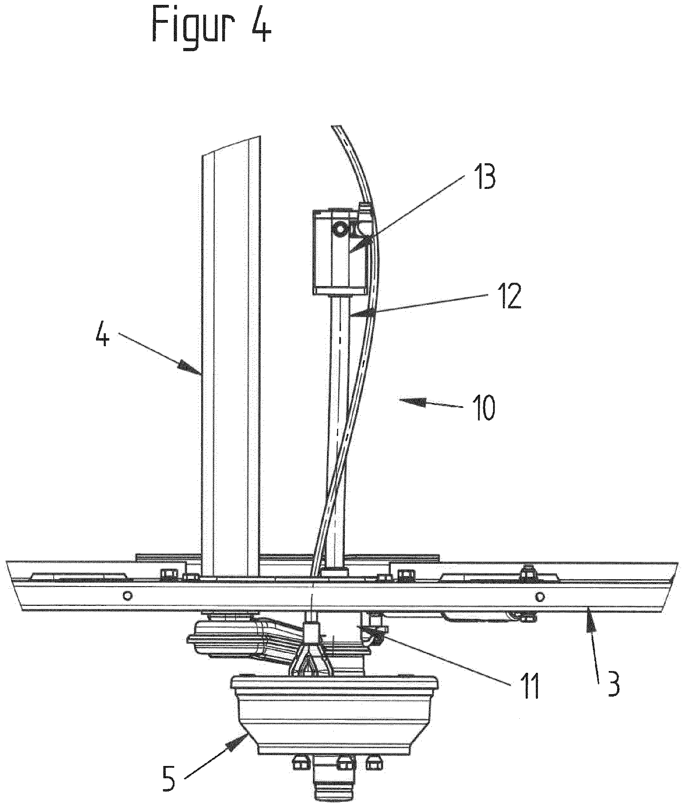

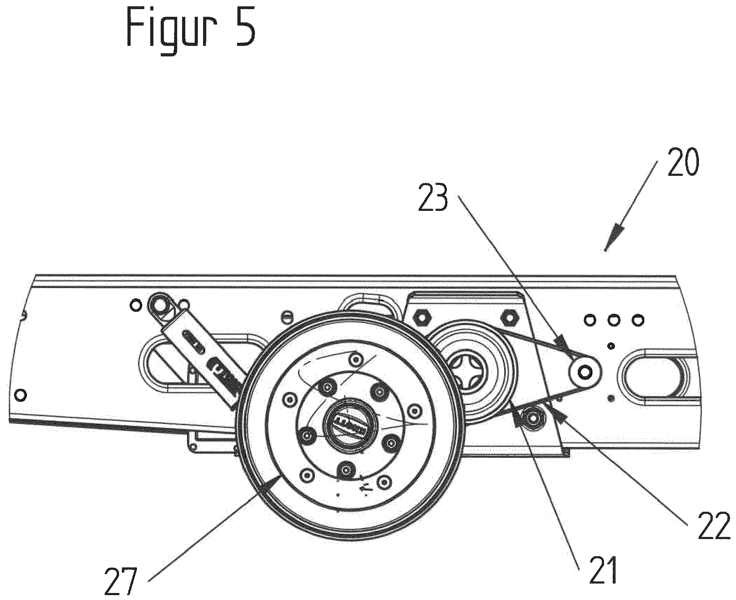

Figuren 2 und 3 zeigen ein typisches Anhängerchassis 2, hier in Ausprägung für einen Wohnwagen. Dieses umfasst ein Gestell 3, an welchem eine Achse 4 angeordnet ist, an deren Enden Räder 5 befestigt sind. Am Chassis 2 befindet sich eine über ein Seil bzw. Gestänge 8 betägigbare Bremseinheit 7. In Fahrtrichtung LINKS ist die weiter in Figur 4 darstellte Lösung mit einem sogenannten PTO-Stummel (Power Take Out) 10 mit Verbindungswelle zu einem am Chassis montierten Motor/Generator dargestellt ist. Auf der in Fahrtrichtung RECHTEN Seite ist eine weiter in Figur 5 darstellte Lösung mit ebenfalls einem sogenannten PTO-Stummel gezeigt, welcher über einen doppelten Riementrieb 20 auf einen im Chassis integrierten Motor/Generator wirkt.

Gemäß Figur 4 ist der sogenannte PTO (Power Take Out) Stummel 10 zu sehen, bei dem durch den Achsstummel eine Welle 11 geführt ist, welche mit der rotierenden Bremsnabe des Rades 5 verbunden ist. An deren Ende ist eine drehmomentenübertragende Welle 12 angebracht, welche dann mit einem am Chassis oder Aufbau verbundenen Motor/Generator 13 verbunden ist und die Drehbewegung der Räder bzw. das Drehmoment überträgt.

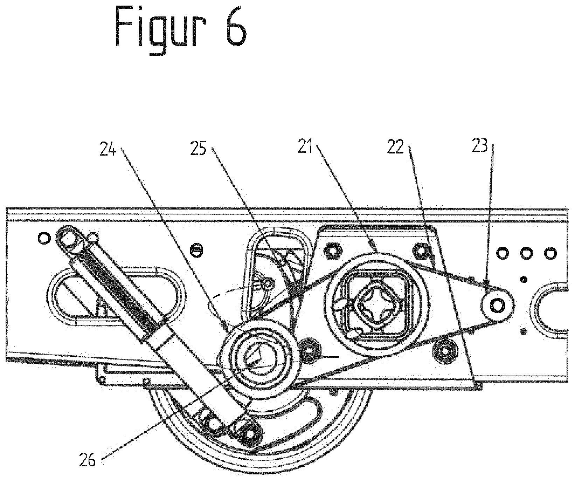

Auch die in den Figuren 5 und 6 gezeigte Lösung umfasst einen PTO-Stummel, der eine Riemenscheibenantriebswelle 26 darstellt, auf welcher hinten eine Riemenscheibe 24 angebracht ist. Von dieser ersten Riemenschiebe 24 wird ein Zahnriemen 25 zu einer zweiten Riemenscheibe 21 geführt, welche sich konzentrisch zum Drehpol der Achsschwinge befindet. Diese zweite Riemenscheibe 21 ist über einen Riemen 22 mit einer dritten Riemenscheibe 23 verbunden. Diese führt direkt oder indirekt zum am Chassis verbauten Motor/Generator (nicht gezeigt). Durch eine doppelte Riemenführung bleiben die Riemenlängen auch bei Federungsarbeit immer konstant.

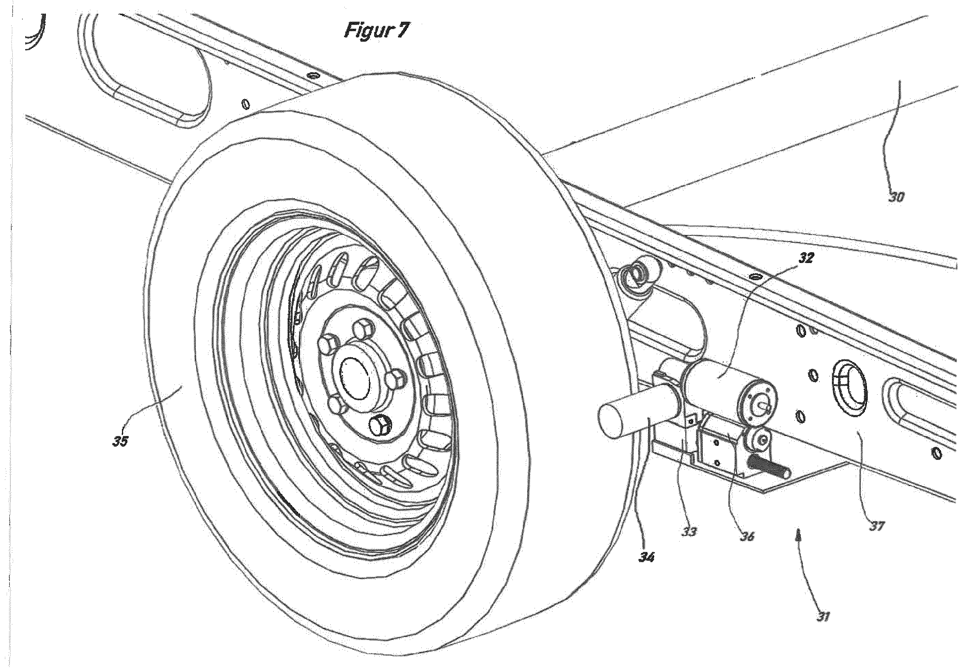

Bei der Ausführung gemäß Figur 7 ist der Generator 32 direkt am Längsträger 37 des Anhängers 31 befestigt. Dabei ist der Generator 32 direkt oder über eine Getriebeübersetzung 33 an eine Reibrolle 34 gekoppelt, die an mindestens einen Reifen 35 des Anhängers 31 angepresst wird.

Die Figur 7 zeigt eine beispielhafte Ausführung mit einem Generator 32 mit Getriebe 33 und Reibrolle 34 sowie einem Linearaktuator 36 zum Anpressen der Reibrolle.

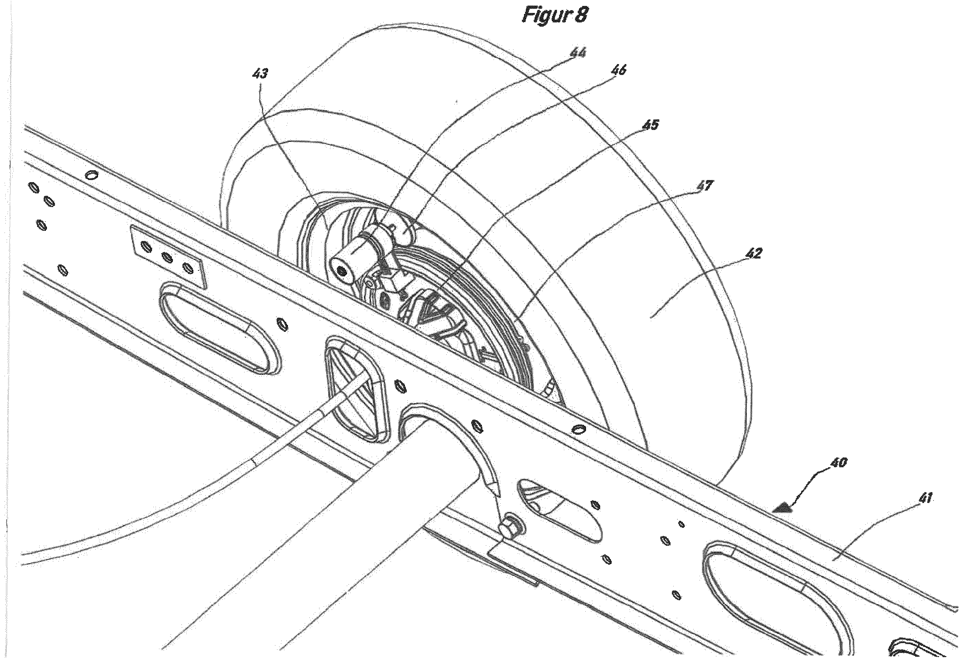

In einer weiteren Ausführung gemäß Figur 8 wird ebenfalls ein Generator 44 an der Bremsträgerplatte 45 befestigt. Dabei ist der Generator 44 direkt an eine Reibrolle 46 gekoppelt, die an eine Innenseite des Felgenmauls 43 des Anhängers 40 angepresst werden kann.

Figur 8 zeigt die beispielhafte Ausführung, bei der die Reibrolle 46 linear an die Außenseite der Bremstrommel angepresst wird.

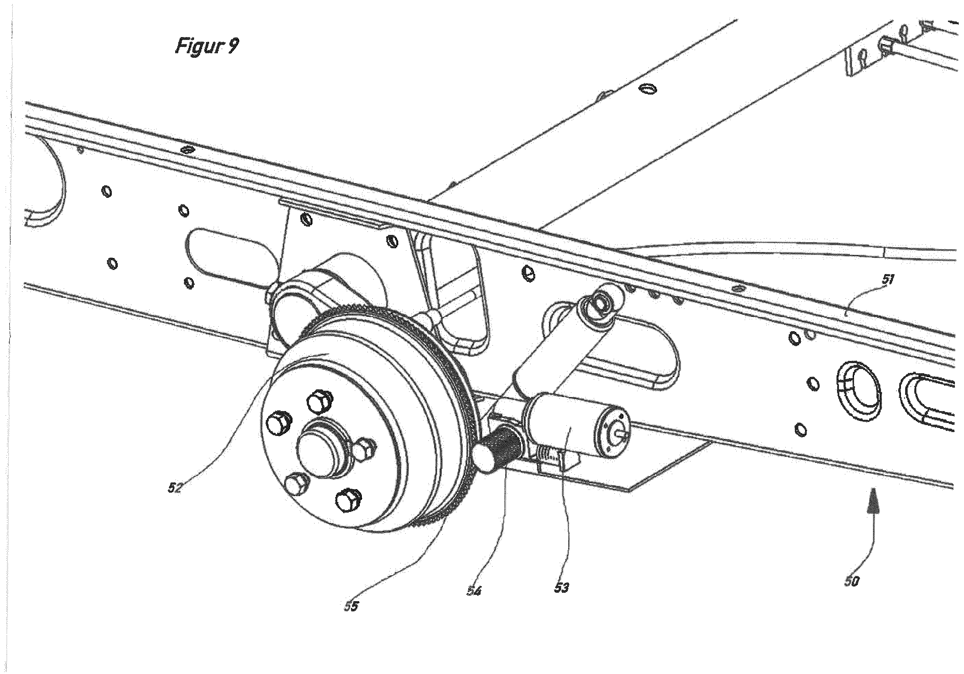

Bei einer weiteren Ausführung gemäß Figur 9 ist der Generator 53 am Längsträger 51 des Anhängers 50 befestigt. Dabei ist der Generator 53 an ein Rollenritzel 54 gekoppelt, das mit der Verzahnung 55 aussen auf der Bremstrommel 52 in Eingriff ist.

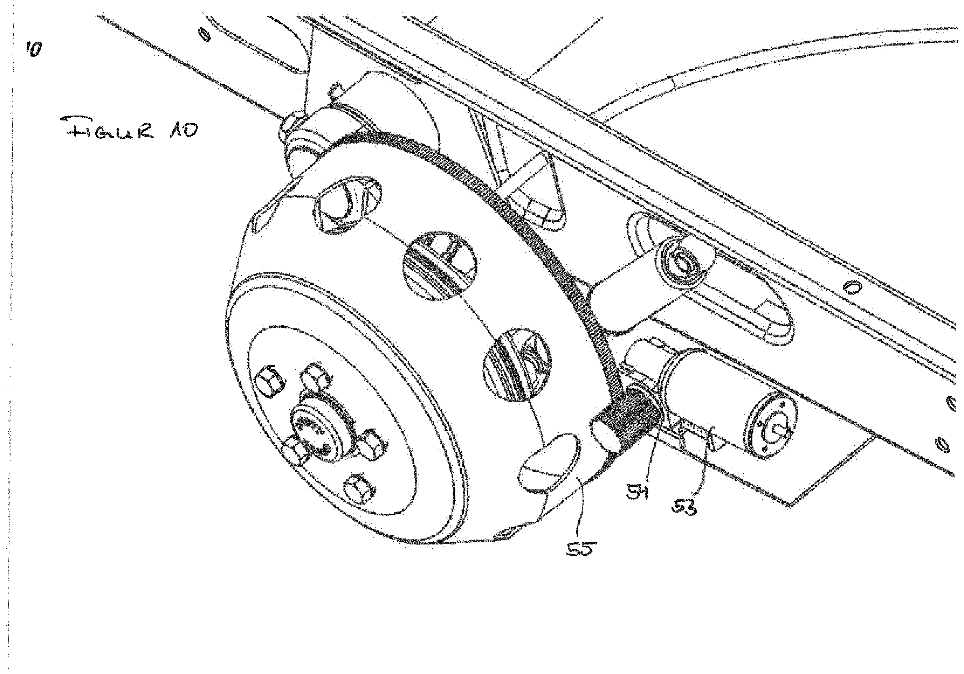

Die Figur 10 zeigt die Ausführung, bei der ein Generator 53 mit Getriebe und Zahnrad 54 mit einem außenverzahnten trommelförmigen Zusatzelement 55 in Eingriff gebracht ist.

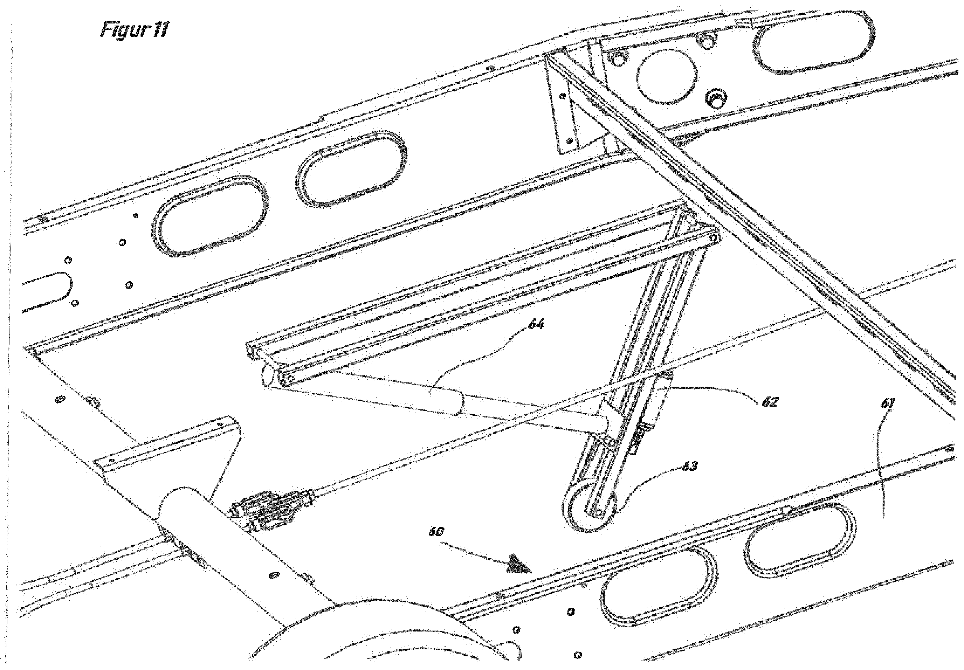

Eine weitere Ausführung gemäß Figur 11 beinhaltet einen am Anhänger 60 befestigten Generator 62, der an eine Laufrolle 63 gekoppelt ist und bei Bedarf über einen Linearaktuator 64 abgesenkt und in Kontakt mit dem Fahrbahnbelag gebracht werden kann.

Die beschriebenen Ausführungsbeispiele dienen nur der Erläuterung und sind nicht beschränkend.

### Bezugszeichen

- 1: Wohnwagen
- 2: Chassis
- 3: Gestell
- 4: Achse
- 5: Räder
- 6: Anhängekupplung
- 7: Bremseinheit
- 8: Gestänge
- 10: Generatoranbindung
- 11: Welle
- 12: Welle
- 13: Generator
- 20: Generatoranbindung
- 21: Riemenscheibe
- 22: Riemen
- 23: Riemenscheibe
- 24: Riemenscheibe
- 25: Riemen
- 26: Riemenscheiben-Antriebswelle
- 27: Bremstrommel
- 30: Achse
- 31: Anhänger
- 32: Generator
- 33: Getriebe
- 34: Reibrolle
- 35: Reifen
- 36: Linearaktuator
- 37: Längsträger
- 40: Anhänger
- 41: Gestell
- 42: Rad
- 43: Felgenmaul
- 44: Generator
- 45: Bremsträgerplatte
- 46: Reibrolle
- 47: Bremstrommel
- 50: Anhänger
- 51: Längsträger
- 52: Bremstrommel
- 53: Generator
- 54: Zahnrad
- 55: Verzahnung
- 60: Anhänger
- 61: Gestell
- 62: Generator
- 63: Reibrolle
- 64: Linearaktuator

## Patentansprüche

1. Fahrzeuganhänger, **dadurch gekennzeichnet, dass** dieser einen durch eine Bewegung des Anhängers antreibbaren elektrischen Generator aufweist.

2. Fahrzeuganhänger nach Anspruch 1, **dadurch gekennzeichnet, dass** der Generator eine Lichtmaschine ist.

3. Fahrzeuganhänger nach einem der vorgehenden Ansprüche, **dadurch gekennzeichnet, dass** der Generator von einer Achse/Welle des Anhängers antreibbar ist.

4. Fahrzeuganhänger nach einem der vorgehenden Ansprüche, **dadurch gekennzeichnet, dass** der Generator über einen Zahnriemen antreibbar ist.

5. Fahrzeuganhänger nach Anspruch 4, **dadurch gekennzeichnet, dass** der Zahnriemen auf einer Riemenscheibe an einer Achse des Anhängers läuft.

6. Fahrzeuganhänger nach einem der vorgehenden Ansprüche, **dadurch gekennzeichnet, dass** der Generator über ein Reibrad antreibbar ist.

7. Fahrzeuganhänger nach Anspruch 6, **dadurch gekennzeichnet, dass** das Reibrad an einem Reifen des Anhängers anliegt.

8. Fahrzeuganhänger nach Anspruch 6, **dadurch gekennzeichnet, dass** das Reibrad an einer Radtrommel des Anhängers anliegt.

9. Fahrzeuganhänger nach einem der vorgehenden Ansprüche, **dadurch gekennzeichnet, dass** der Generator über eine Verzahnung antreibbar ist.

10. Fahrzeuganhänger nach Anspruch 9, **dadurch gekennzeichnet, dass** die Verzahnung mit einem PTO-Stummel (Power Take Out) zusammenwirkt.

11. Fahrzeuganhänger nach Anspruch 9, **dadurch gekennzeichnet, dass** die Verzahnung mit einem Zahnkranz an einer Bremstrommel des Anhängers zusammenwirkt.

12. Fahrzeuganhänger nach Anspruch 11, **dadurch gekennzeichnet, dass** der Zahnkranz auf der Aussenseite der Bremstrommel ausgebildet ist.

13. Fahrzeuganhänger nach einem der vorgehenden Ansprüche, **dadurch gekennzeichnet, dass** der Generator über eine Laufrolle antreibbar ist.

14. Fahrzeuganhänger nach Anspruch 13, **dadurch gekennzeichnet, dass** die Laufrolle absenkbar an einem Gestell des Anhängers angeordnet ist.

15. Fahrzeuganhänger nach einem der vorgehenden Ansprüche, **dadurch gekennzeichnet, dass** dieser eine vom Generator zu ladenden Energiespeicher aufweist.

16. Fahrzeuganhänger nach einem der vorgehenden Ansprüche, **dadurch gekennzeichnet, dass** dieser ein Ladegerät aufweist.

17. Fahrzeuganhänger nach einem der vorgehenden Ansprüche, **dadurch gekennzeichnet, dass** dieser ein Wohnanhänger ist.

18. Elektrische Einheit zur Versorgung eines Fahrzeuganhängers, **gekennzeichnet durch** einen durch eine Bewegung des Anhängers antreibbaren elektrischen Generator.
